# EUROPEAN PATENT APPLICATION

(11) **EP 3 564 199 A1**
(43) Date of publication of application: **06.11.2019**
(21) Application number: 19181378.1
(22) Date of filing: 20.05.2014
(51) Int. Cl.: C04B 28/14, C04B 111/00

(54) **CONSTRUCTION PANEL HAVING IMPROVED FIXING STRENGTH AND METHOD FOR THE MANUFACTURE THEREOF**

(30) Priority: 20.05.2013 GB 201309058
(62) Divisional of application: 14725538.4
(71) Applicant: Saint-Gobain Placo SAS, 92150 Suresnes (FR)
(72) Inventor: HOTCHIN, Glen, Coventry, CV3 2TT (GB); JONES, Nicholas, Coventry, CV3 2TT (GB); RICHARDSON, Adam, Coventry, CV3 2TT (GB)
(74) Representative: Murgitroyd & Company

(57) **Abstract**

A plasterboard comprises a gypsum matrix having fibres embedded therein. The plasterboard optionally has a backing lamina attached to one of the faces thereof. The gypsum matrix of the plasterboard optionally comprises a polymeric additive.

## Description

The present invention relates to panels for use in building construction and the manufacture thereof. In particular, the present invention relates to panels for providing partitions to which items such as sinks, televisions, or radiators may be affixed.

Light-weight panels such as plasterboard (e.g. gypsum plasterboard), polystyrene board and fibreboard are commonly used to provide partitions within buildings. Their advantages for this application include the fact that they are light and quick to install.

However, in certain cases, such light-weight panels may have the drawback that they are not strong enough to support fixtures (e.g. sinks, televisions, radiators, fire extinguishers, shelves and any other item that requires attachment to the panel). In such cases, the weight of the fixture may cause the fixing means (e.g. screws) to be pulled out of the panel, such that the fixture falls away from the partition.

Typically, this problem has been addressed by providing plywood sheets to increase the fixing strength of the panel. In this case, the plywood sheet is provided on the side of the panel opposite to that on which the fixture is to be located. The plywood sheet may provide increased strength for retaining one or more fixing means (e.g. screws) employed to secure the fixture to the panel. Typically, the plywood sheet is positioned within the partition framework, and the plasterboard then fixed to the plywood, so that it lies outside the partition framework.

As an alternative, metal support means may be provided. These may comprise fixing plates, channels, straps, or metal fasteners. As is the case for plywood sheets, the metal support means are generally positioned on the side of the panel opposite that to which the fixture is to be secured, and act to receive and secure fixing means, e.g. fixing screws, that are used to attach the fixture to the panel.

Both these arrangements have the disadvantage that they require the panels and the additional supporting components to be affixed to each other on-site. Moreover, when metal support means are used, a plurality of such support means may be needed to support the full set of fixing means required to secure the fixture to the panel. Thus, the installation process may be time-consuming and expensive.

Furthermore, the addition of metal support means or plywood sheets increases the weight and thickness of the partition, and/or results in a reduction in cavity wall space. In general, the plywood itself must be cut to size on site, thus increasing the time required for installation and possibly leading to the release of dust and potentially harmful components.

Therefore, there is a need to provide improved panels that are able to retain fixing means and support fixtures, and that do not require time-consuming installation processes.

It has been found that by providing a panel comprising a substrate board having a polymer-based lamina secured to one of its faces, an improvement in the ability of the panel to retain fixing means may be achieved. However, such panels may be susceptible to screw overtightening, whereby even a small additional rotation of a screw after peak tightening torque has been achieved may result in stripping of the inner surface of the screw hole, with the result that the screw is no longer retained in the panel. As a result, it may be difficult to insert screw fixings into the panel in a reliable and reproducible manner.

It has been found that, in the case where the substrate board is a gypsum plasterboard, this problem may be reduced by selecting a plasterboard that includes at least a fibre additive.

Therefore, in a first aspect, the present invention may provide a panel comprising a plasterboard, the plasterboard having a backing lamina attached to one of the faces thereof, the plasterboard comprising a gypsum matrix having fibres embedded therein, in an amount of at least 1 wt% relative to the gypsum.

Preferably, the lamina is a polymer-based lamina, typically comprising substantially a material selected from the group comprising: PVC, HDPE, Nylon, polycarbonate, Bakelite, polypropylene, acetal, and fibreglass.

Typically, the lamina has a thickness of at least 1 mm. In general, the lamina is glued to the plasterboard, e.g. by means of a polymer-based glue, such as an acrylic glue.

Preferably, the gypsum matrix further comprises a starch additive in an amount of at least 1 wt% relative to the gypsum, preferably 2 wt%, more preferably 2.5 wt%.

Typically, the fibres are present in an amount of at least 2 wt% relative to the gypsum, preferably 2.5 wt%

In general, the fibres are selected from a group comprising glass fibres, wood fibres, fibres derived from wood, and mixtures thereof. In certain embodiments, however, the fibres may be synthetic polymer fibres.

For example, the fibres may be regenerated cellulose fibres, such as lyocell, that are manufactured from dissolved wood pulp. In this case, the fibres typically have one or more of the following properties:
- an average length that is greater than 0.1 mm, preferably greater than 0.2 mm;
- an average length that is less than 0.5 mm, preferably less than 0.4 mm;
- an average diameter that is less than 20 micron, preferably less than 15 micron.

In certain embodiments, the fibres may be present within the plasterboard in the form of particles of agglomerated fibres, for example, paper particles and/or wood particles (for example, fine sawdust particles). In general, these particles are irregular in shape. The particles typically have one or more of the following properties:
- their maximum dimension is preferably greater than 0.5 mm, preferably greater than 1 mm, more preferably greater than 1.5 mm;
- their maximum dimension is less than 3 mm, preferably less than 2.5 mm;
- the average length of the fibres within the particles is greater than 1 mm;
- the average length of the fibres within the particles is less than 15 mm;
- the average diameter of the fibres within the particles is greater than 1 micron, preferably greater than 5 micron;
- the average diameter of the fibres within the particles is less than 50 micron, preferably less than 30 micron.

The fibres follow a convoluted path such that they are contained within the boundaries of the particle.

In the case that the fibres are glass fibres, the fibres may have one or more of the following properties:
- an average length greater than 10 mm, preferably greater than 15 mm;
- an average length less than 50 mm, preferably less than 30 mm;
- an average diameter greater than 20 micron, preferably greater than 30 micron;
- an average diameter less than 80 micron, preferably less than 70 micron.

Preferably, the starch comprises a non-migratory starch, that is, a starch compound that is retained within the core of the plasterboard and does not migrate to the board surface. Such starches are distinguished from migratory starches, which typically migrate to the surface of the plasterboard and serve the purpose of improving the bonding of the plasterboard core to the paper facing. However, the plasterboard may additionally comprise such migratory starches.

Non-migratory starches may be provided in a number of different ways, as is well-known in the art. For example, the starch may comprise dextrin, as described in US7708847, which is hereby incorporated by reference.

In other cases, the starch may be a pre-gelatinised starch.

In certain embodiments, the starch may be selected to have a low viscosity (e.g. a Brookfield viscosity of less than 60 cps) at a temperature of less than 60°C, and a much higher viscosity (e.g. a Brookfield viscosity of over 10000 cps) at a temperature of 70°C. Such starches are described in e.g. US8252110, which is hereby incorporated by reference. These starches have a rheology that is strongly temperature-dependent: it is thought that, at low temperatures, the starch may be dispersed in the core in order to penetrate into the inter-crystalline spaces. As soon as the temperature is above 60°C, the viscosity of the starch increases rapidly up to a very high level to ensure that the starch actually remains in the core and does not migrate to the core/facing interface.

In certain embodiments, the starch is a substituted starch, such as described in US7048794, which is hereby incorporated by reference. Substituted starches are starch derivatives that have been chemically reacted to replace one or more of the hydroxyl functional groups. Typically, the process involves etherification or esterification of a starch or modified starch which appends ether or ester linkages along the starch polymer backbone. This process is distinct from other modifications typically made to starches such as oxidization, acid-thinning, cross-linking, and pre-gelatinisation, although such processes may also be applied to the starch, prior to or after substitution with one or more types of functionalities.

It is thought that substituted starches act as efficient binders for the inorganic phase of plasterboards, e.g. gypsum, thus increasing the core strength of the plasterboard. Preferably, the starch is insoluble in cold water, but dissolves at a higher processing temperature during forming, setting, or drying of the plasterboard. This is thought to limit excessive migration of the starch, so that it remains in the plasterboard core, to provide a binder for the gypsum crystals.

The substituted starch may comprise hydroxyethylated, hydroxypropylated, and/or acetylated starch. Preferably, the starch is a hydroxyethylated starch.

The starch may be derived from e.g. potato, tapioca, or corn. Preferably, the starch is derived from corn.

In a second aspect, the present invention may provide a plasterboard comprising a gypsum matrix, the gypsum matrix having fibres embedded therein, the fibres being present in an amount of at least 1 wt% relative to the gypsum, the gypsum matrix further comprising a polymeric additive, the polymeric additive being present in an amount of at least 1 wt% relative to the gypsum.

Preferably, the fibres are present in an amount of at least 3 wt% relative to the gypsum, more preferably at least 4 wt%, most preferably at least 4.5 wt%. Preferably, the polymeric additive is present in an amount of at least 3 wt% relative to the gypsum, more preferably at least 4 wt%, most preferably at least 4.5 wt%. It is thought that these relatively high levels of fibre and polymeric additive may provide the plasterboard with sufficient ability to retain fixing means that no backing lamina is required.

By omitting a backing lamina, it may be possible to provide a panel having adequate fixing strength at a relatively lower cost, due to reduced raw material costs and greater ease of manufacture. Additionally, the panel may be easier to recycle, since the requirement to separate the lamina from the plasterboard may be avoided.

Typically the polymeric additive is selected from group comprising polyvinyl acetate, poly vinyl acetate-ethylene co-polymer, polyvinyl pyrrolidone crosslinked with polystyrene sulfonate, polyvinyl alcohol, methyl cellulose, hydroxyethyl methyl cellulose, styrene-butadiene copolymer latex, acrylic ester latex, acrylic copolymer latex, polyester resin, epoxy resin, polymethyl methacrylate, polyacrylic acid, cationic starch, ethylated starch, dextrin and mixtures thereof.

In general, the polymeric additive is a starch.

Preferably, in the case that the starch is present at a level of at least 3 wt% relative to the gypsum, the starch is a migratory starch. Surprisingly, it has been found that at these relatively high starch contents, even a migratory starch will be retained within the plasterboard core in sufficient amounts so as to enhance the fixing strength of the plasterboard. At the same time, the migratory starch may aid in improving the bonding of the plasterboard core to a paper facing (if used), so that there is no need to include multiple starch varieties within the plasterboard.

In the case that the starch is present at a level of at least 3 wt% relative to the gypsum, it is generally preferred that the starch is a native starch, rather than a pre-gelatinised starch. At these relatively high starch levels, pre-gelatinised starch is considered to impart excessive viscosity to the gypsum slurry.

Typically, the starch may be derived from e.g. wheat, corn, maize, or rice. At starch levels of 3 wt% or more relative to the gypsum, potato starch is less preferred, since its relatively large grain size is considered to have a deleterious effect on water distribution within the gypsum slurry.

Preferably, the fibres are glass fibres.

Preferably, in the case that the fibres are present at a level of at least 3 wt% relative to the gypsum, the fibre length is less than 10 mm, more preferably less than 8 mm. It is thought that longer fibres are difficult to process in these relatively large amounts within a gypsum slurry. Typically, the fibre length is greater than 4 mm.

Typically, the fibre diameter is in the range 5-50 micron, preferably 10-30 micron, more preferably 10-20 micron.

In certain embodiments, the fibres may be organic fibres, e.g. natural polymer fibres, such as those derived from wood, or synthetic polymer fibres.

In certain embodiments, the plasterboard may contain silicone oil or wax and/or a biocide.

In general, the plasterboard has paper facings. However, in certain cases, the plasterboard may have a mat partially or fully embedded at its surface, for example, a glass fibre mat, which may be pre-coated. Additionally or alternatively, the plasterboard may have a thermoplastic coating or a polymeric film (such as polyester) on one or more of its faces.

In a third aspect, the present invention may provide a method of manufacturing a plasterboard according to the second aspect of the invention, comprising the step of adding starch to a gypsum slurry, wherein the grain size of the starch is less than 40 micron.

Preferably, the grain size of the starch is less than 30 micron. It is thought that a large starch grain size results in an uneven water distribution within the slurry, such that more water is required overall.

In a fourth aspect, the present invention may provide a method of manufacturing a plasterboard according to the second aspect of the invention, comprising the steps of adding starch and fibre to a gypsum slurry, shaping the slurry to form a plasterboard and drying the plasterboard at a temperature in the range 140-180°C.

The plasterboard manufactured through the methods of the third or fourth aspects of the invention may have one or more of the optional features of the plasterboard according to the second aspect of the invention.

The invention will now be described by way of example with reference to the following Figures in which:
Figure 1 is a schematic graph of torque against rotation angle.
Figure 2 is a schematic graph of torque against rotation angle for Example 1 and Comparative Examples 1 and 2.

### Examples 1-3

Gypsum plasterboards were prepared from the compositions described below. A 2mm sheet of PVC was glued to one face of each plasterboard using Aquagrip 29860 glue.

### Example 1

A gypsum plasterboard was prepared from a slurry containing stucco and desulphogypsum (DSG), the DSG being present in an amount of 31 wt% relative to the stucco. The slurry additionally contained the following ingredients:
- ethylated starch in an amount of 2.9 wt% relative to the amount of stucco and DSG (the starch is available from Grain Processing Corporation under the trade name Coatmaster K57F);
- glass fibre in an amount of 3.2 wt% relative to the amount of stucco and DSG.

### Example 2

A gypsum plasterboard was prepared from a slurry containing stucco and desulphogypsum (DSG), the DSG being present in an amount of 31wt% relative to the stucco. The slurry additionally contained the following ingredients:
- glass fibre in an amount of 0.46 wt% relative to the stucco and DSG;
- 0.85 wt% Collofilm 120 starch;
- ethylated starch in an amount of 2.9 wt% relative to the amount of stucco and DSG (the starch is available from Grain Processing Corporation under the trade name Coatmaster K57F);
- Cellulose fibre in an amount of 3.7 wt% relative to the amount of stucco and DSG (the cellulose fibre is available from Lenzing under the trade name Tencel FCP

10/300/M. The fibres have an average length of 0.3 mm, measured via MORFI fibre analysis, and a diameter of 10 micron).

### Example 3

A gypsum plasterboard was prepared from a slurry containing stucco and desulphogypsum (DSG), the DSG being present in an amount of 31 wt% relative to the stucco. The slurry additional contained the following ingredients:
- glass fibre in an amount of 0.46 wt% relative to the stucco and DSG;
- 0.85 wt% Collofilm 120 starch;
- ethylated starch in an amount of 4.4 wt% relative to the amount of stucco and DSG (the starch is available from Grain Processing Corporation under the trade name Coatmaster K57F);
- Cellulose fibre in an amount of 5.5 wt% relative to the amount of stucco and DSG (the cellulose fibre is available from Lenzing under the trade name Tencel FCP 10/300/M. The fibres have an average length of 0.3 mm, measured via MORFI fibre analysis, and a diameter of 10 micron).

### Examples 4-12

Gypsum plasterboards were prepared from the compositions described below.

### Example 4

A gypsum plasterboard was prepared from a slurry containing the following ingredients:
- stucco;
- glass fibre in an amount of 5 wt% relative to the stucco, the fibre length being about 6mm;
- acid hydrolysed maize starch (from Tate & Lyle) in an amount of 5 wt% relative to the stucco.

The average screw pull-out strength, measured on four samples, was 617N.

### Example 5

A gypsum plasterboard was prepared from a slurry containing the following ingredients:
- stucco;
- glass fibre in an amount of 5 wt% relative to the stucco, the fibre length being about 6mm;
- ethylated starch in an amount of 5 wt% relative to the amount of stucco (the starch is available from Grain Processing Corporation under the trade name Coatmaster K57F).

The average screw pull-out strength, measured on four samples, was 773N.

### Example 6

A gypsum plasterboard was prepared from a slurry containing the following ingredients:
- stucco;
- glass fibre in an amount of 5 wt% relative to the stucco, the fibre length being about 6mm;
- dextrin in an amount of 5 wt% relative to the stucco.

The average screw pull-out strength, measured on four samples, was 579N.

### Example 7

A gypsum plasterboard was prepared from a slurry containing the following ingredients:
- stucco;
- glass fibre in an amount of 5 wt% relative to the stucco, the fibre length being about 6mm;
- maize starch in an amount of 5 wt% relative to the stucco (this is a migratory starch).

The average screw pull-out strength, measured on four samples, was 569N.

### Example 8

A gypsum plasterboard was prepared from a slurry containing the following ingredients:
- stucco;
- glass fibre in an amount of 5 wt% relative to the stucco, the fibre length being about 6mm;
- acid hydrolysed maize starch (from Tate & Lyle) in an amount of 5 wt% relative to the stucco;
- microsilica in an amount of 20 kg/m³.

The average screw pull-out strength, measured on four samples, was 653N.

### Example 9

A gypsum plasterboard was prepared from a slurry containing the following ingredients:
- stucco;
- glass fibre in an amount of 5 wt% relative to the stucco, the fibre length being about 6mm;
- ethylated starch in an amount of 5 wt% relative to the amount of stucco (the starch is available from Grain Processing Corporation under the trade name Coatmaster K57F);
- microsilica in an amount of 20 kg/m³.

The average screw pull-out strength, measured on four samples, was 706N.

### Example 10

A gypsum plasterboard was prepared from a slurry containing the following ingredients:
- stucco;
- glass fibre in an amount of 5 wt% relative to the stucco, the fibre length being about 6mm;
- acid hydrolysed maize starch (from Tate & Lyle) in an amount of 5 wt% relative to the stucco;
- silicone oil in an amount of 1 wt% relative to the stucco.

The average screw pull-out strength, measured on four samples, was 541N.

### Example 11

A gypsum plasterboard was prepared from a slurry containing the following ingredients:
- stucco;
- glass fibre in an amount of 3 wt% relative to the stucco, the fibre length being about 6 mm;
- acid hydrolysed maize starch (from Tate & Lyle) in an amount of 3 wt% relative to the stucco.

### Example 12

A gypsum plasterboard was prepared from a slurry containing the following ingredients:
- stucco;
- glass fibre in an amount of 4 wt% relative to the stucco, the fibre length being about 6 mm;
- polyvinyl acetate in an amount of 5 wt% relative to the stucco.

### Comparative examples 1-2

Gypsum plasterboards were prepared from the compositions described below. A 2mm sheet of PVC was glued to one face of each plasterboard using Aquagrip 29860 glue.

### Comparative example 1

A gypsum plasterboard was prepared from a slurry containing stucco and desulphogypsum (DSG), the DSG being present in an amount of 31 wt% relative to the stucco. The slurry additionally contained the following ingredients:
- glass fibre in an amount of 0.46 wt% relative to the stucco and DSG;
- 0.85 wt% Collofilm 120 starch.

### Comparative example 2

A gypsum plasterboard was prepared from a slurry containing stucco and desulphogypsum (DSG), the DSG being present in an amount of 31 wt% relative to the stucco. The slurry additionally contained the following ingredients:
- glass fibre in an amount of 0.46 wt% relative to the stucco and DSG;
- 0.85 wt% Collofilm 120 starch;
- ethylated starch in an amount of 2.9 wt% relative to the amount of stucco and DSG (the starch is available from Grain Processing Corporation under the trade name Coatmaster K57F).

**Examples 13 and 14**Gypsum plasterboards were prepared from the compositions described below.

### Example 13

A gypsum plasterboard was prepared from a slurry containing the following ingredients:
- stucco;
- glass fibre in an amount of 2 wt% relative to the stucco, the fibre length being about 6mm;
- acid hydrolysed maize starch (from Tate & Lyle) in an amount of 5 wt% relative to the stucco;

The average screw pull-out strength, measured on four samples, was 458N.

### Example 14

A gypsum plasterboard was prepared from a slurry containing the following ingredients:
- stucco;
- glass fibre in an amount of 2 wt% relative to the stucco, the fibre length being about 6mm;
- acid hydrolysed maize starch (from Tate & Lyle) in an amount of 5 wt% relative to the stucco;
- silicone oil in an amount of 1 wt% relative to the stucco.

The average screw pull-out strength, measured on four samples, was 410N.

### Comparative Example 3

Comparative Example 3 is a gypsum fibreboard comprising paper fibres bound by a calcium sulphate binder (Rigidur board from British Gypsum).

### Quantification of resistance to overtightening

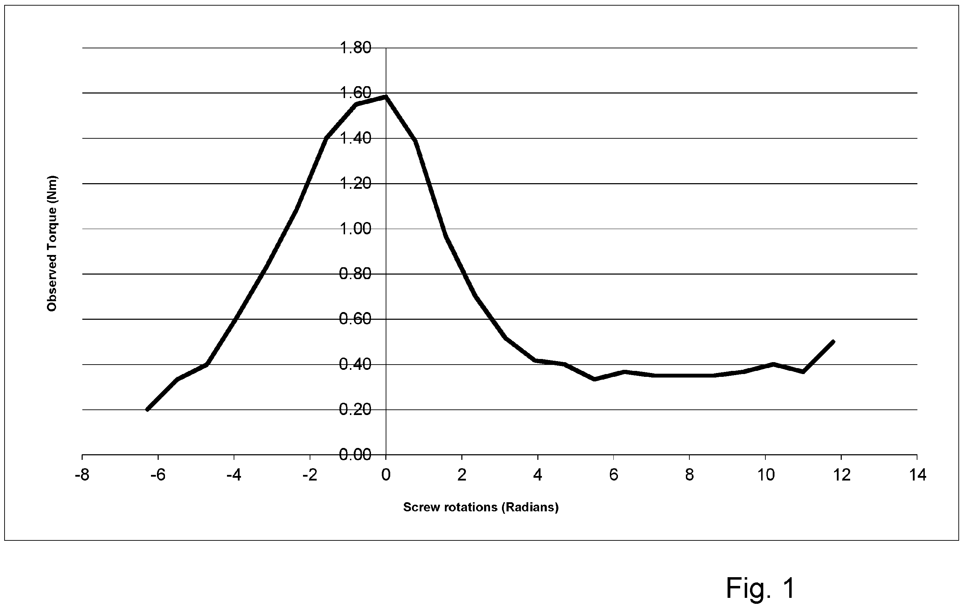

To quantify the resistance to overtightening of the panels of the Examples 1-3 and Comparative Examples 1 and 2, a graph of torque against rotation angle was plotted for a screw being inserted into each panel. The screw was a No. 10 woodscrew having a length of 50 mm and a diameter of 5 mm. An example of such a graph is shown in Figure 1.

The area below the curve was then calculated between the rotation angle of zero (corresponding to peak torque) and 7.85 radians. This area is considered to give an indication of the work done in tightening the screw after peak torque has been attained. It is thought that the greater the work done after peak torque has been attained, the lower the risk of overtightening the screw and stripping material from the inner surface of the screw hole.

The peak torque was also measured for each board. The results are set out in Table 1:

**Table 1**

| **Example** | **Work done (J)** | **Peak torque (Nm)** |
|---|---|---|
| Example 1 | 23.5 | 3.5 |
| Example 2 | 29.7 | 4.6 |
| Example 3 | 32.4 | 4.9 |
| Comparative Example 1 | 18.7 | 3.2 |
| Comparative Example 2 | 21.0 | 3.3 |

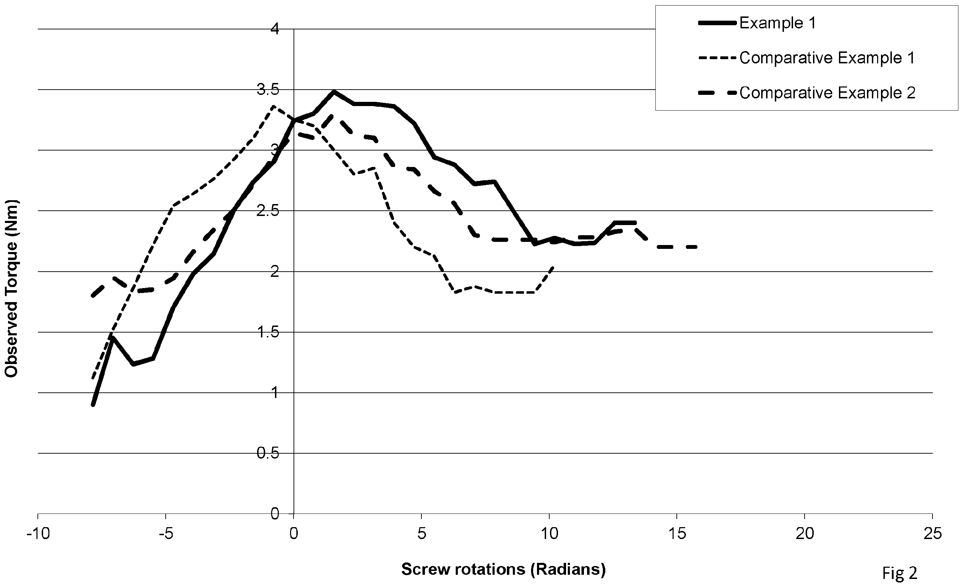

Figure 2 shows a graph of torque against rotation angle for a screw being inserted into a panel according to Example 1 and Comparative Examples 1 and 2 respectively. This shows that the panel of Example 1 retains a higher torque (after peak torque has been attained) than the panels of the Comparative Examples. This is considered to indicate an improved ability of the panel to withstand stripping of a screw hole formed therein.

### Impact tests

To quantify the impact resistance of plasterboard, a 500g steel ball having a diameter of 50 mm is dropped down a vertical 6 m pipe onto 200 mm x 200 mm sample of the board. The sample is supported in a horizontal orientation on the rim of a drainage hopper. The drainage hopper is generally cylindrical and is positioned such that its longitudinal axis coincides with that of the pipe. The internal diameter of the drainage hopper is 115 mm and the external diameter is 122 mm. There is at least 40 mm clearance between the top of the hopper and the bottom of the pipe.

The depth of the indent produced in the board sample is measured and the results are set out in Table 2:

**Table 2**

| **Example** | **Impact depth (mm)** |
|---|---|
| Example 4 | 5.8 |
| Example 11 | 2.7 |
| Example 12 | 3.1 |
| Comparative Example 1 | 11.3 |
| Comparative Example 3 | 9.3 |

Objects, aspects, embodiments and features of the invention may be described or defined in the following clauses.
1. A panel comprising a plasterboard, the plasterboard having a backing lamina attached to one of the faces thereof, the plasterboard comprising a gypsum matrix having fibres embedded therein in an amount of at least 1 wt% relative to the gypsum.
2. A panel according to clause 1, wherein the gypsum matrix further comprises a starch additive, the starch additive being present in an amount of at least 1 wt% relative to the gypsum.
3. A panel according to clause 2, wherein the starch additive is present in the gypsum matrix of the plasterboard in an amount of at least 2 wt% relative to the gypsum.
4. A panel according to any one of the preceding clauses, wherein the fibres are present in the gypsum matrix of the plasterboard in an amount of at least 2 wt% relative to the gypsum.
5. A panel according to any one of the preceding clauses, in which the fibres are selected from a group comprising glass fibres, wood fibres, fibres derived from wood (such as regenerated cellulose fibres), and mixtures thereof.
6. A panel according to clause 5, wherein the fibres are regenerated cellulose fibres and further wherein the average length of the fibres lies in the range 0.1-0.5 mm and / or the average diameter of the fibres is below 20 micron.
7. A panel according to any one of clauses 1-6, wherein the fibres are present within the board in the form of particles of agglomerated fibres, such as paper particles or wood particles.
8. A panel according to clause 7, wherein the maximum dimension of the particles is in the range 0.5-3 mm and / or the average length of the fibres within the particles is in the range 1-15 mm and / or the average diameter of the fibres within the particles is in the range 1-50 micron.
9. A panel according to clause 5, wherein the fibres are glass fibres and further wherein the average length of the fibres lies in the range 10-50 mm and / or the average diameter of the fibres lies in the range 5-50 micron.
10. A panel according to clause 5, wherein the fibres are glass fibres and further wherein the average length of the fibres lies in the range 10-50 mm and / or the average diameter of the fibres lies in the range 20-80 micron.
11. A panel according to any one of clauses 2-10, wherein the starch is a non-migratory starch.
12. A panel according to clause 11, wherein the starch is selected from the group comprising: dextrin, pre-gelatinised starch, substituted starch, and starch having a Brookfield viscosity of less than 60 cps at a temperature below 60°C and a Brookfield viscosity greater than 10,000 cps at a temperature of 70°C.
13. A panel according to clause 11 or 12, wherein the starch is a substituted starch and the substituent group is an ether substituent group or an ester substituent group.
14. A panel according to any one of the preceding clauses, wherein the lamina comprises substantially a material selected from the group comprising: PVC, HDPE, Nylon, polycarbonate, Bakelite, polypropylene, acetal, and fibreglass.
15. A panel according to any one of the preceding clauses, wherein the lamina has a thickness of at least 1 mm.
16. A plasterboard comprising a gypsum matrix having fibres embedded therein in an amount of at least 1 wt% relative to the gypsum, the gypsum matrix further comprising a polymeric additive, the polymeric additive being present in an amount of at least 1 wt% relative to the gypsum.
17. A plasterboard according to clause 16, wherein the fibres are present in an amount of at least 3 wt% relative to the gypsum, and the polymeric additive is present in an amount of at least 3 wt% relative to the gypsum.
18. A plasterboard according to clause 16 or clause 17, wherein the polymeric additive is selected from group comprising polyvinyl acetate, poly vinyl acetate-ethylene co-polymer, polyvinyl pyrrolidone crosslinked with polystyrene sulfonate, polyvinyl alcohol, methyl cellulose, hydroxyethyl methyl cellulose, styrene-butadiene copolymer latex, acrylic ester latex, acrylic copolymer latex, polyester resin, epoxy resin, polymethyl methacrylate, polyacrylic acid, cationic starch, ethylated starch, dextrin and mixtures thereof.
19. A plasterboard according to any one of clauses 16 to 18, wherein the polymeric additive is a starch.
20. A plasterboard according to clause 19, wherein the starch is a migratory starch.
21. A plasterboard according to clause 19, wherein the starch is an acid-thinned starch.
22. A plasterboard according to any one of clauses 19-21, wherein the starch is a native starch.
23. A plasterboard according to any one of clauses 16 to 22, wherein the fibres are glass fibres.
24. A plasterboard according to clause 23, wherein the fibres are 4-10 mm long.
25. A plasterboard according to clause 23 or clause 24, wherein the fibre diameter is in the range 5-50 micron.
26. A method of manufacturing a plasterboard according to any one of clauses 19-22, comprising the step of adding starch to a gypsum slurry, wherein the grain size of the starch is less than 40 micron.
27. A method of manufacturing a plasterboard according to any one of clauses 19-22, wherein the plasterboard is dried at a temperature in the range 140-180°C.

## Claims

1. A plasterboard comprising a gypsum matrix having fibres embedded therein in an amount of at least 1 wt% relative to the gypsum, the gypsum matrix further comprising a polymeric additive, the polymeric additive being present in an amount of at least 1 wt% relative to the gypsum.

2. A plasterboard according to claim 1, wherein the fibres are present in an amount of at least 3 wt% relative to the gypsum, and the polymeric additive is present in an amount of at least 3 wt% relative to the gypsum.

3. A plasterboard according to claim 1 or claim 2, wherein the polymeric additive is selected from group comprising polyvinyl acetate, poly vinyl acetate-ethylene co-polymer, polyvinyl pyrrolidone crosslinked with polystyrene sulfonate, polyvinyl alcohol, methyl cellulose, hydroxyethyl methyl cellulose, styrene-butadiene copolymer latex, acrylic ester latex, acrylic copolymer latex, polyester resin, epoxy resin, polymethyl methacrylate, polyacrylic acid, cationic starch, ethylated starch, dextrin and mixtures thereof.

4. A plasterboard according to any one of claims 1 to 3, wherein the polymeric additive is a starch.

5. A plasterboard according to claim 4, wherein the starch is a migratory starch.

6. A plasterboard according to claim 4, wherein the starch is an acid-thinned starch.

7. A plasterboard according to any one of claims 4-6, wherein the starch is a native starch.

8. A plasterboard according to any one of claims 1 to 7, wherein the fibres are glass fibres.

9. A plasterboard according to claim 8, wherein the fibres are 4-10 mm long.

10. A plasterboard according to claim 8 or claim 9, wherein the fibre diameter is in the range 5-50 micron.

11. A method of manufacturing a plasterboard according to any one of claims 4-7, comprising the step of adding starch to a gypsum slurry, wherein the grain size of the starch is less than 40 micron.

12. A method of manufacturing a plasterboard according to any one of claims 4-7, wherein the plasterboard is dried at a temperature in the range 140-180°C.
